# EUROPEAN PATENT SPECIFICATION

(11) **EP 2 565 209 B1**
(45) Date of publication and mention of the grant of the patent: **27.04.2016**
(21) Application number: 11826132.0
(22) Date of filing: 02.05.2011
(51) Int. Cl.: C08F 8/22, C08F 8/30, C08F 214/24, C08L 27/18, C08K 3/22, C08K 3/26, C08K 5/21

(54) **FLUORINE RESIN MOLDED ARTICLE AND PRODUCTION OF SAME**
FLUORHARZFORMARTIKEL UND HERSTELLUNG DAVON
ARTICLE MOULÉ EN FLUORORÉSINE ET SON PROCÉDÉ DE FABRICATION

(30) Priority: 30.04.2010 JP 2010104776
(43) Date of publication of application: 06.03.2013
(73) Proprietor: Du Pont-Mitsui Fluorochemicals Co. Ltd., Tokyo 101-0064 (JP)
(72) Inventor: PHAM, Hoai-Nam, Shizuoka-Shi Shizuoka (JP); YABE, Hiromasa, Shizuoka-Shi Shizuoka (JP); LEE, Jeong, Chang, Shizuoka-Shi Shizuoka (JP)
(74) Representative: Matthews, Derek Peter
(86) International application number: PCT/IB2011/002990
(87) International publication number: WO 2012/038838

(56) References cited:
- EP-A1- 0 178 935
- EP-A1- 1 083 189
- EP-A1- 1 170 303
- EP-A1- 1 398 342
- EP-A2- 0 457 255
- WO-A2-2004/044014

## Description

### [Technical Field]

The present invention relates to a fluororesin molded article in which the eluted fluorine ion concentration is reduced and a method for producing a fluororesin molded article in which the eluted fluorine ion concentration is reduced.

### [Background Art]

Tetrafluoroethylene/perfluoro(alkylvinyl ether) copolymer (PFA), which is a heat-meltable fluororesin, has superior characteristics in regard to heat resistance, chemical resistance, highfrequency electrical properties, non-tackiness, and flame resistance. The material has thus been widely used in production materials for the chemical industry, such as pipes for transporting acids, alkalis, and other liquid chemicals, solvents, and paints, as well as liquid chemical storage containers or tanks, and in materials for the electrical industry such as tubes, rollers, and electrical wires.

Fluororesins also are commonly used in production line equipment and wafer carriers in the field of semiconductor fabrication. However, because the fluororesin itself thermally decomposes when melt-molded at high melt-molding temperatures, large numbers of fluorine ions are generated. As a result, a large number of fluorine ions are eluted from the fluororesin molded articles, and the effects of these impurities entering into production processes are thus becoming a serious problem. In addition, the eluted fluorine ions generate hydrofluoric acid in aqueous solution, which has a corrosive and/or etching effect on semiconductor devices during production and causes immediate problems or is a factor in device malfunction. Reducing the number of fluorine ions is thus desired, and the seriousness of the problem with fluororesins and molded articles formed therefrom has been noted (Solid State Technology 33, 65 (1990)).

Methods for effectively and dramatically decreasing the number of eluted fluorine ions from fluororesin products are currently being developed in conjunction with high levels of growth in semiconductor fabrication technologies. At present, fluororesins that have been stabilized by fluorination of unstable terminal groups are being used in semiconductor applications, but larger containers are now required due to the increasing diameter of semiconductor wafers, and there is thus a strong desire among semiconductor manufacturers and semiconductor chemical manufacturers for additional reduction in eluted fluorine ion levels from fluororesin containers.

Moreover, when fluororesin containers are used for sample concentration or separation in the field of microanalysis, a fluororesin that produces few eluted fluorine ions is desired in order to achieve higher analytical precision.

To this end, as a method for resolving the problems with fluorine ions that are eluted from these fluororesin products, methods that have been proposed have involved modifying fluororesins by polymerization, subjecting fluororesins to terminal group amidation, and subjecting fluororesins to terminal group fluorination.

In U.S. Patent No. 6,939,495B2, a fluororesin molded article is described in which the eluted fluorine ion concentration is about 1 ppm. This article is obtained by melt-molding a perfluorodioxole-modified (tetrafluoroethylene/perfluoromethylvinyl ether) copolymer (raw material) obtained by microemulsion polymerization of perfluoromethylvinyl ether (PMVE) and tetrafluoroethylene in the presence of 0.3 to 1.6 wt% of perfluorodioxole. However, the eluted fluorine ion concentration reduction effect is poor, and the eluted fluorine ion concentration is about one-half that of a molded article obtained by melt-molding (tetrafluoroethylene/perfluoromethylvinyl ether) copolymer (raw material) that has not bee modified with perfluorodioxole. The material is thus insufficient for semiconductor applications. In addition, because perfluorodioxole is used as the modification agent, there are problems with inability to maintain the superior characteristics of the tetrafluoroethylene/perfluoro(methylvinyl ether) copolymer. In addition, in the US publication, there is no mention concerning perfluoro(alkylvinyl ether) copolymers other than perfluorodioxole and perfluoro(methylvinyl ether).

In EP 0 178 935 A1 and EP 0 457 255 A2 methods are described in which unstable terminal groups such as -CH₂OH, -COOH, and -COF in fluororesins are modified to thermally stable terminal groups (amides (-CONH₂)) by treatment of the fluororesin with ammonia gas or a compound that generates ammonia gas (referred to below as "terminal group amidation method"). It has been reported that the eluted fluorine ion concentration of the fluorine resin is decreased to 1 ppm as a result of terminal group amidation methods. However, when a fluororesin that has been subjected to terminal group amidation is melt-molded, the-CONH₂ terminal groups oxidize and undergo hydrolytic decomposition and/or thermal decomposition, and the eluted fluorine ion concentration of the resulting fluororesin molded articles increases (refer to Comparative Examples 2 and 3 below).

In addition, in U.S. Patent No. 4,743,658, a conversion method is described that produces terminal groups that are more thermally stable than amido groups by treating the fluororesin with fluorine gas ("fluorination method" below), where all of the thermally unstable terminal groups are converted to -CF₃ terminal groups, which are thermally stable. A fluororesin with an eluted fluorine ion concentration of 3 ppm or less is described that is produced by fluorination in this manner. Although the fluororesin (raw material) that has been subjected to this fluorination treatment does not contain any unstable terminal groups, the fluororesin itself undergoes thermal decomposition during melt-molding, thereby generating fluorine ions, and thus the concentrated of eluted fluorine ions from the resulting fluororesin molded article increases (refer to Comparative Example 1 below).

In the prior art described above, the fluororesin itself or the unstable terminal groups of the fluororesin undergo thermal decomposition during melt-molding of the fluororesin, and the fluorine ion concentration of the final molded product cannot be decreased. The inventors of the present invention carried out painstaking investigations concerning methods for additionally decreasing eluted fluorine ion concentrations in end molded products and arrived at the present invention upon discovering a method whereby the above problems can be resolved.

EP 1 398 342 A1 discloses stabilized fluorine-containing polymer powder having an average particle size of 5 to 100 microns prepared by contacting polymer with a fluorinating agent so that the 6 total number of -CH₂OH and -COF terminal groups is decreased to 7-50 per 10 carbon atoms, and then contacting the fluorine-containing polymer powder with ammonia gas to convert the -COF groups to - CONH₂ groups so that the total number of -CH₂OH and -CONH₂ terminal groups is decreased to 7-50 6 per 10 carbon atoms. The process also involves increasing the density of the polymer by heat treatment above the polymer melting point followed by crushing, milling and air classifying the resultant powder.

### [Prior Art Literature]

### [Patent Documents]

[Patent Document 1] U.S. Patent No. 6,939,495
[Patent Document 2] EP 0 178 935 A1
[Patent Document 3] U.S. Patent No. 4,743,658
[Patent Document 4 EP 0 457 255 A2

### [Non-Patent Documents]

[Non-Patent Document 1] Solid State Technology 33, 65 (1990)

### [Summary of the Invention]

### [Problems to be Solved by the Invention]

With the technologies that have been offered in the past, the terminals of fluorine resins have been converted to thermally stable terminal groups or fluororesins have been subjected to fluorination treatments prior to molding. However, when melt-molding is carried out at a high temperature, fluorine ions are generated by the thermally stable terminal groups or due to thermal decomposition of the fluororesin. As a result, the amount of fluorine ions that are eluted from the fluororesin molded article increases, and it is not possible to obtain a fluororesin molded article with reduced fluorine ion concentration. For this reason, there have been problems with device malfunction in semiconductor fabrication processes in which these fluororesin molded articles have been used.

The present invention was developed in order to resolve these types of problems with the prior art, and an object of the invention is to provide a fluororesin molded article having reduced fluorine ion [production] subsequent to molding.

The present invention offers a production method for a fluororesin molded article with lowered fluorine ion elution levels and a fluororesin molded article having low levels of eluted fluorine ions.

### [Means for Solving the Problems]

The present invention provides a method for producing a fluororesin molded article in which the fluororesin is fluorinated and then melt-moulded in the presence of a fluorine ion lowering compound selected from ammonia, urea, nitrogen compounds that generate ammonia, and alkalis.

Another preferred aspect of the present invention is a production method for a fluororesin molded article in which the nitrogen compound that generates ammonia is at least one type of compound that is selected from ammonium salts and organic amine compounds.

Another preferred aspect of the present invention is a production method for a fluororesin molded article in which the alkali is at least one type of compound selected from alkali metal hydroxides and alkali metal carbonates.

Another preferred aspect of the invention is a production method for a fluororesin molded article, in which the fluorine ion lowering compound is mixed with the fluorine resin prior to molding.

Another preferred aspect of the present invention is a production method for fluororesin molded articles, wherein the fluorine ion lowering compound is added at the time of molding of the fluororesin.

Another preferred aspect of the present invention is a production method for fluororesin molded articles, wherein molding of the fluororesin is carried out by subjecting a fluororesin composition to any of the following molding methods: melt extrusion molding, injection molding, transfer molding, rotary molding, compression molding, or blow molding.

The present invention provides a fluororesin molded article that is obtained by any of the fluororesin molded article production methods that have been described above.

The present invention provides a fluororesin molded article that is formed from a tetrafluoroethylene/perfluoro(alkylvinyl ether) copolymer, where the fluorine ion concentration is 1 ppm or less when 36 g of the molded article is introduced into 40 g of ultrapure water, and elution is allowed to occur for 24 h under elution conditions of atmospheric pressure and 25°C, whereupon the eluted fluorine ions are measured in accordance with JIS K0127 (ion chromatography).

### [Effect of the Invention]

The present invention offers a fluororesin molded article that has decreased eluted fluorine ion concentration but retains the superior heat resistance, chemical resistance, and mechanical properties of fluororesins.

The present invention provides dramatically superior effects that were unpredictable based on the prior art, insofar as, by providing a trace amount of a fluorine ion lowering compound along with the fluororesin during final melt-molding, a fluororesin molded article can be offered that has a greatly lowered eluted fluorine ion concentration while maintaining the superior heat resistance, chemical resistance, and mechanical properties of fluororesins.

### [Embodiment of the Invention]

The fluororesin that is used in the present invention is a well-known material.

The present invention is used for fluoropolymers that can be melt-molded. The term "melt-molding" means that the polymer is made to flow in a melted state, and a conventional well-known melt-molding device such as an extruder or injection molder is used in order to form a molded article such as a film, fiber, or tube from the melt. The material can be molded into a molded article that has sufficient strength and toughness for use towards the intended objective.

Examples of this type of melt-moldable fluororesin include copolymers of tetrafluoroethylene (TFE) with at least one type of copolymerizable fluorinated monomer (comonomer) in an amount sufficient to lower the melting point of the polymer to a temperature that is substantially lower than the melting point of the TFE simple polymer (polytetrafluoroethylene (PTFE)), e.g., a melting point of 315°C or below.

The TFE copolymer that can be melt-molded generally contains the comonomer in an amount sufficient to produce a copolymer in which the melt flow rate (MFR) at the standardized temperature for the specified copolymer, in accordance with ASTM D-1238, is 0.5 to 100 g/10 min. The melt viscosity is measured at 372°C using the method of ASTM D-1238 modified as described in U.S. Patent No. 4,380,618, and the value is at least 10² Pa-s, more preferably 10² Pa·s to 10⁶ Pa-s. and most preferably about 10³ to 10⁵ Pa-s. Other melt-moldable fluororesins that may be cited as examples are copolymers of ethylene (E) or propylene (P) with TFE or CTFE, normally referred to as ETFE, ECTFE, and PCTFE.

The melt-moldable copolymer that is preferably used in the present invention is a copolymer having 40 to 98 mol% tetrafluoroethylene units and 2 to 60 mol% of at least one other monomer. Preferred comonomers of TFE that may be cited are hexafluoropropylene (HFP) and perfluoro(alkylvinyl ether) (PAVE, where the alkyl groups are linear or branched alkyl groups with carbon numbers of 1 to 5). The PAVE monomer preferably contains alkyl groups with carbon numbers of 1 to 4. Multiple types of PAVE monomers may be used as the copolymer.

Preferred TFE copolymers are FEP (TFE/HFP copolymers), PFA (TFE/PAVE copolymers), TFE/HFP/PAVE copolymers wherein the PAVE is a perfluoro(ethylvinyl ether) PEVE) and/or perfluoro(propylvinyl ether) (PPVE), MFA (TFE/perfluoro(methylvinyl ether) (PMVE)/PAVE copolymers in which the alkyl groups of the PAVE have carbon numbers of 2 or greater), THV (TFE/HFP/VF2), and the like. The perfluoro(alkylvinyl ether) units in the copolymer are preferably present at 1 to 10 wt%. In addition, these polymers and copolymers may be used by mixing them.

In a preferred aspect of the invention, the fluororesin that is used is a perfluoro fluororesin. In a preferred aspect of the invention, the material is a copolymer of tetrafluoroethylene and perfluoro(alkylvinyl) ether (TFE/PAVE copolymer). This copolymer may also contain other monomers such as hexafluoropropylene.

The fluororesin molded article that is produced by the present invention, excluding all fillers, is characterized by being composed of a copolymer of at least 50 wt% of fluoromonomer, preferably tetrafluoroethylene (TFE) and at least one type of copolymerizable fluorinated monomer. In a preferred aspect, the article is a fluororesin molded article that is composed of at least 75 wt%, preferably at least 90 wt%, of fluoropolymer, excluding all fillers.

The fluororesin that is used may have any form, including a powder, powder granules, flakes, pellets, and beads. In order to decrease the amount of fluorine ions that are eluted in comparison to nonfluorinated materials or partially fluorinated materials, it is preferable to use a fluororesin in which nearly all of the unstable terminal groups have been converted to thermally stable -CF₃ terminal groups prior to melt-molding.

In a preferred aspect of the present invention, the fluororesin molded article can be produced by preparing fluororesin particles by the polymerization of TFE and at least one type of copolymerizable fluororesin monomer, converting the resulting fluororesin particles to fluorinated fluororesin particles having unstable terminal groups in which the number of unstable terminal groups has been decreased by fluorination in accordance with U.S. Patent No. 4,743,658, then bringing the fluorinated fluororesin particles into contact with inert gas to produced fluorinated fluororesin particles with a reduced extractable fluorine ion concentration, followed by melt-molding of the resulting fluorinated fluororesin particles in the presence of a fluorine ion lowering compound to produce the fluororesin molded article.

In another aspect of the present invention, the fluororesin molded article that can be melt-molded contains a fluorine ion lowering compound along with a copolymer that can be melt-molded with tetrafluoroethylene and perfluoro(alkylvinyl) ether. The fluororesin is preferably in a particulate form that is suitable for use in melt-molding, such as a power, flake, pellet, cube, or bead. In addition, in another aspect of the present invention, the fluorine ion lowering compound is present as a coating on the particles.

In another aspect of the present invention, the fluororesin composition that can be melt-molded contains a copolymer of perfluoro(alkylvinyl) ether and tetrafluoroethylene having the characteristics described below in which the unstable terminal groups of the fluororesin have been fluorinated, as well as a fluorine ion lowering compound.
(a) Less than six -CF₂CH₂OH, -CONH₂, and -COF terminal groups per 10⁶ carbon atoms.
(b) An elutable fluorine content of 3 ppm or less based on weight.

In addition, in order to carry out melt-molding, a melt flow rate (MFR) or melt viscosity range may be selected for the resin that is used in accordance with objectives. For example, for the melt viscosity of the fluororesin copolymer composition, the melt flow rate (MFR, 372°C) is in the range of 0.5 to 100 g/10 min, preferably 0.5 to 50 g/10 min, when used for melt-molding, e.g., melt extrusion molding or injection molding.

The compound that has the effect of lowering the fluorine ion concentration that is used in the present invention is preferably weakly basic, and specific examples that may be cited include nitrogen compounds that can generate ammonia or NH₃. Ammonium salts, organic amine compounds may be cited as nitrogen compounds that can generate ammonia or NH₃. Specific examples of nitrogen compounds that can generate ammonia or NH₃ include salts of ammonia, ammonia aqueous solution (NH₄OH), urea (NH₂CONH₂), ammonium carbonate ((NH₄)₂CO₃), ammonium hydrogen carbonate (NH₄HCO₃), ammonium carbamate (NH₄CO₂NH₂), guanidine carbonate ((NH₂)₂(C=NH)H₂CO₃), ammonium sulfate ((NH₄)₂SO₄), ammonium sulfamate (NH₄SO₃NH₂), ammonium oxalate ((NH₄)₂C₂O₄), ammonium formate (NH₄HCO₃), ammonium thiocyanate (NH₄SCN), ammonium phosphate ((NH₄)₂HPO₄, (NH₄)H₂PO₄, (NH₄)₃PO₄), biuret (NH₂-CO-NH-CO-NH₂), ammonium thiosulfate ((NH₄)₂S₂O₃), ammonium perchlorate (NH₄ClO₄), ammonium adipate (NH₄OOC(CH₂)₄COONH₄), ammonium benzoate (C₆H₅COONH₄), ammonium chloride (NH₄Cl), ammonium acetate (CH₃COONH₄), ammonium salicylate (C₆H₄(OH)COONH₄), ammonium sebacate (NH₄OOC(CH₂)₈COONH₄), diammonium phthalate (C₆H₄(COONH₄)₂), ammonium hydrogen maleate (HCHC=CHCOONH₄).

Specific examples of alkalis that may be cited include sodium hydroxide (NaOH), potassium hydroxide (KOH), cesium hydroxide (Cs(OH)), rubidium hydroxide (RbOH), and other alkali metal hydroxides, and sodium carbonate (Na₂CO₃) and other alkali metal carbonates. These compounds may be used individually or in combinations of two or more types.

In addition, the aforementioned bases, ammonia salts, the organic amine compounds and other such nitrogen compounds or alkalis are preferably highly soluble in water. There are no particular restrictions on the form of these fluorine ion lowering compounds, and gases, liquids, micropowders and other solids may be used. At the time of use, the material is preferably used by dissolving, dispersing, or suspending it in aqueous solvent.

Prior to melt-molding of the fluororesin that is treated with the fluorine ion lowering compound, if the material is allowed to stand, or if introduced into the hopper of a molder, the fluorine ion lowering effects will be reduced if the fluorine ion lowering compound evaporates off or decomposes, and the effects will not be obtained. As a result, it is preferable for the boiling point or decomposition temperature of the fluorine ion lowering compound to be higher than the boiling point of the carrier solution. For example, for aqueous solutions, the fluorine ion lowering compound melting point is 50°C or greater, preferably 100°C or greater, more preferably 130°C or greater.

In the present invention, the trace amount of fluorine ion lowering compound and the fluororesin may be mixed to obtain a fluororesin composition containing the fluorine ion lowering compound. This fluororesin composition may then be subjected to melt-molding, thereby obtaining a molded article having extremely low levels of fluorine ions.

Mixing of the fluororesin and the fluorine ion lowering compound may be carried out prior to melt-molding or may be carried out at the time of melt-molding. The mixing method has no particular restrictions, and mixing methods that are commonly used may be cited. For example, mixing may be carried out using a planetary mixer, high-speed impeller disperser, rotary drum mixer, screw-type mixer, conveyor belt mixer, ball mill, pebble mill, sand mill, roll mill, attriter, bead mill or other common well-known dispersion and mixing devices. Of these devices, those are preferred that can uniformly disperse the fluorine ion lowering compound in the fluororesin. In addition, the following types of wet mixing methods may be cited as other mixing methods. Examples include methods in which the trace amount of fluorine ion lowering compound is dispersed in the fluororesin by spraying the fluorine ion lowering compound onto the fluororesin after dissolution in an aqueous solvent or organic solvent that functions as a carrier. Gentle drying is preferably carried out in order to drive off the solvent. The organic solvent referred to above has no particular restrictions, and examples that may be cited include methanol, ethanol, chloroform, acetone, and toluene. In addition, it is preferable to use a material that has high solvability with respect to the fluorine ion lowering compound. The fluorine ion lowering compound can be applied to the surface of the fluororesin by such a wet mixing method.

The ratio of the fluorine ion lowering compound with respect to the solids content of the fluororesin will depend on the use of the fluororesin composition, but the ratio is 0.1 to 1000 ppm, preferably 1 to 500 ppm, more preferably 10 to 250 ppm. If the ratio of the fluorine ion lowering compound is too low, the eluted fluorine ion lowering effects cannot be expected, whereas if the ratio of the fluorine ion lowering compound is too high, then the excess fluorine ion lowering compound may remain as organic impurity in the molded article, which will prevent the article from being used in semiconductor fields.

There are no particular restrictions on the fluororesin molding method, and conventional well-known molding methods may be used. Examples of molding methods that may be cited include compression molding, extrusion molding, transfer molding, blow molding, injection molding, rotary molding, lining molding, inflation extrusion molding, and film molding. However, extrusion molding and injection molding are the preferred molding methods among them.

The molded article that is obtained by the fluororesin melt-molding method of the present invention is a molded article that has reduced amounts of fluoride ions that can be eluted. In accordance with the present invention, a molded article can be offered that contains only 1 ppm or less of elutable fluoride ions by weight, measured by the measurement method described below.

Examples of molded articles that are obtained by the fluororesin molding method of the present invention include valves, wafer carriers, bottles, pipes, films, tubes, and sheets.

### [Working Examples]

The present invention is described in additional detail below by providing working examples and comparative examples.

Measurement of the various physical properties in the present invention was carried out by the methods described below.

### A. Measurement of physical properties

### (1) Melting point (melting peak temperature)

A differential scanning calorimeter was used (Model Pyris 1 DSC, manufactured by Perkin Elmer). About 10 mg of sample was weighed and introduced into an aluminum pan prepared for use with this device. After crimping with a crimper prepared for use with this device, the material was placed in the DSC main unit, and the temperature was increased from 150°C to 360°C at 10°C/min. The melting curve obtained at this time was used in order to determine the melting peak temperature (Tm).

### (2) Melt flow rate (MFR)

A melt indexer (manufactured by Toyo Seiki) equipped with corrosion resistant cylinder, die, and piston, in accordance with ASTM D-1238-95, was used. 5 g of sample powder was packed into a cylinder that had been held at 372 ± 1°C, and, after retaining for 5 min, the material was extruded through the die orifice under a 5-kg weight (piston and weight). The extrusion rate at this time (g/10 min) was determined and used as the MFR.

### (3) Tensile properties (tensile strength, elongation, tensile modulus)

The fluororesin composite composition was subjected to melt compression molding at 350°C, and a sample with a thickness of about 1 mm was subjected to measurements at a pull rate of 50 mm/min in accordance with JIS K7127.

### (4) Measurement of eluted fluorine ion concentration

Ion chromatography: The fluorine ion level was measured by ion chromatography in accordance with JIS K0127. 36 g of molded article prepared by the injection molding method described in section (5) below was introduced into 40 g of ultrapure water used as elution liquid, and a static leaching test was carried out under elution conditions of 24 h at 25°C. All of the ultrapure water that was used in the present invention was purified using a Milli-Q Gradient 1.2 L device manufactured by Nippon Millipore. In general, water that is used for chemical analysis is standardized as A1 to A4 in accordance with JIS K0557. The purity of the water that was obtained with this purification device was A4 and thus was a purity that was suitable for general use in trace component testing, and the like. Next, the water containing the eluted ions was subjected to measurement using an ion chromatograph (Dionex DX-120 model device). The concentration of the eluted fluorine ions was calculated based on the concentration in the water. The fluorine ion concentration in the water was used for determining the fluorine concentration in the molded articles reported in the working examples.

### (5) Injection molding

The fluororesin composition described above was melt-molded using an injection molding device (model 160 msp-10, manufactured by Mitsubishi Heavy Industries) at a mold temperature of 180°C, a molding temperature of 380°C, and an injection rate of 10 mm/sec. An injection molded bar was obtained (width 12.55 mm, thickness 6.13 mm, length 122.25 mm).

### B. Raw materials

The raw materials used in the working examples and the comparative examples of the present invention are described below.

### (1) Fluororesin (TFE/PAVE copolymer, PFA)

PFA-1: TFE-PPVE copolymer, spheroidal with a major diameter of 2.5 mm, a minor diameter of 2 mm, and a thickness of 3 mm (pellet), MFR 15 g/10 min, melting point 309°C, PPVE content 3.6 wt%.

TFE/PPVE copolymer obtained by converting unstable terminal groups to thermally stable -CF₃ terminal groups using a TFE/PPVE copolymer produced by polymerization using a chain transfer agent, a polymerization initiator, and surfactant as described in the working examples and methods of U.S. Patent No. 5,760,151, in accordance with U.S. Patent No. 4743658.

PFA-2: TFE-PPVE copolymer, spheroidal with a major diameter of 2.5 mm, a minor diameter of 2 mm, and a thickness of 3 mm (pellet), MFR 15 g/10 min, melting point 309°C, PPVE content 3.8 wt%.

TFE/PPVE copolymer obtained by polymerization using a chain transfer agent, a polymerization initiator, and surfactant as described in the working examples and methods of U.S. Patent No. 5,760,151.

PFA-3: TFE/PAVE copolymer (PFA AP211SH, manufactured by Daikin Industries).

### (2) Fluorine ion lowering compound

a) Urea
   NH₂CONH₂ (CAS no. 57-13-6, purity >99.0%, manufactured by Kanto Chemical)
b) Ammonium hydrogen carbonate
   NH₄HCO₃ (CAS no. 1066-33-7, manufactured by Wako Pure Chemical)
c) Sodium hydroxide
   NaOH (CAS no. 1310-73-2, purity 97%, manufactured by Kanto Chemical)

### (Working Example 1)

200 mL of purified water and 120 mg of urea were introduced into a beaker (200 mL) and were stirred for 10 min with a magnetic stirrer in order to completely dissolve the urea in the purified water. Next, 4 kg of the PFA-1 referred to above was introduced into a stainless steel tray (30 cm length x 20 cm width), and the urea aqueous solution was sprayed thereupon. The resulting mixture of urea and PFA was introduced into a dryer and dried for 3 h at 120°C. The urea-treated PFA pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. The measured fluorine ion concentrations were compiled in Table 1 and expressed in units of parts per million. As shown in Table 1, the fluorine ion concentration of the molded article was 0.14 ppm.

### (Working Example 2)

200 mL of purified water and 480 mg of urea were introduced into a beaker (200 mL) and were stirred for 10 min with a magnetic stirrer in order to completely dissolve the urea in the purified water. Next, 4 kg of PFA-1 referred to above was introduced into a stainless steel tray (30 cm length x 20 cm width), and the urea aqueous solution was sprayed thereupon. The resulting mixture of urea and PFA was introduced into a dryer and dried for 3 h at 120°C. The urea-treated PFA pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. The measured fluorine ion concentrations were compiled in Table 1 and expressed in units of parts per million. As shown in Table 1, the fluorine ion concentration of the molded article was 0.06 ppm.

### (Working Example 3)

4 kg of PFA-1 and 800 mg of ammonium hydrogen carbonate were introduced into a polyvinyl bag (25 L), which was shaken by hand for 5 min. The ammonium hydrogen carbonate-treated PFA pellet was then molded under the same conditions as with injection molding carried out as described above. 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. The measured fluorine ion concentrations were compiled in Table 1 and expressed in units of parts per million. As shown in Table 1, the fluorine ion concentration of the molded article was 0.12 ppm.

### (Working Example 4)

4 kg of PFA-1 and 2 g of ammonium hydrogen carbonate were introduced into a polyvinyl bag (25 L), which was shaken by hand for 5 min. The ammonium hydrogen carbonate-treated PFA pellet was then molded under the same conditions as with injection molding carried out as described above. 36 g of the resulting injection molded bar was introduced into 40 g of ultrapure water and an elution test was carried out under elution conditions of 24 h at 25°C. The solution of fluorine ions that had eluted from the injection molded bar was then measured by an ion chromatography method. The measured fluorine ion concentrations were compiled in Table 1 and expressed in units of parts per million. As shown in Table 1, the fluorine ion concentration of the molded article was 0.04 ppm.

### (Working Example 5)

200 mL of purified water and 400 mg of sodium hydroxide were introduced into a beaker (200 mL) and were stirred for 10 min with a magnetic stirrer in order to completely dissolve the sodium hydroxide in the purified water. Next, 4 kg of PFA-1 was introduced into a stainless steel tray (30 cm length x 20 cm width), and the sodium hydroxide aqueous solution was sprayed thereupon. The resulting mixture of sodium hydroxide and PFA was introduced into a dryer and dried for 3 h at 120°C. The resulting sodium hydroxide-treated PFA pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by an ion chromatography method. The measured fluorine ion concentrations were compiled in Table 1 and expressed in units of parts per million. As shown in Table 1, the fluorine ion concentration of the molded article was 0.15 ppm.

### (Comparative Example 1)

Prior to injection molding, the eluted fluorine ion concentration from the raw material pellet of PFA-1 was measured by ion chromatography to be 0.04 ppm. 4 kg of the PFA 1 pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. The measured fluorine ion concentrations were compiled in Table 1 and expressed in units of parts per million. As shown in Table 1, the fluorine ion concentration of the molded article was 3.67 ppm.

### (Comparative Example 2)

PFA-2 having a measured -CONH₂ terminal group number of 90 per 10⁶ carbon atoms as determined by the terminal group analysis method described in U.S. Patent No. 4599386 was used. Prior to injection molding, the eluted fluorine ion concentration from the raw material pellet of PFA-2 was measured at 0.11 ppm by ion chromatography. 4 kg of the PFA-2 pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. As shown in Table 1, the fluorine ion concentration of the molded article was 9.3 ppm.

### (Comparative Example 3)

PFA-3 having a measured -CONH₂ terminal group number of 47 per 10⁶ carbon atoms as determined by the terminal group analysis method described in U.S. Patent No. 2921026 was used. Prior to injection molding, the eluted fluorine ion concentration from the raw material pellet of PFA-3 was measured at 0.01 ppm by ion chromatography. 4 kg of the PFA-3 pellet was then injection molded (molding temperature 380°C, injection rate 10 mm/sec). 36 g of the resulting injection molded bar was introduced into 40 g of ultrapure water and an elution test was carried out under elution conditions of 24 h at 25°C. The solution of fluorine ions that had eluted from the injection molded bar was then measured by ion chromatography. The measured fluorine ion concentrations were compiled in Table 1 and expressed in units of parts per million. As shown in Table 1, the fluorine ion concentration of the molded article was 9.8 ppm.

**[Table 1]**

| | F Ion Lowering Compound | | F Ions (ppm) |
|---|---|---|---|
| | Compound | Added Amount (ppm) | |
| Working Example 1 | Urea | 30 | 0.10 |
| Working Example 2 | Urea | 120 | 0.06 |
| Working Example 3 | Ammonium carbonate | 200 | 0.12 |
| Working Example 4 | Ammonium carbonate | 500 | 0.04 |
| Working Example 5 | Sodium hydroxide | 100 | 0.15 |
| Comparative Example 1 | None | 0 | 3.67 |
| Comparative Example 2 | None | 0 | 9.30 |
| Comparative Example 3 | None | 0 | 9.80 |

**[Table 2]**

| | F Ion Lowering Compound Added Amount | Melting Point (°C) Heat absorbed (J/g) | Crystallization Temperature (°C) Heat released (J/g) | Tensile Strength (MPa) | Elongation (%) | Tensile Modulus (MPa) |
|---|---|---|---|---|---|---|
| Working | 120 | 308.4 | 283.7 | 26.5 | 338 | 526 |
| Example 1 | | 33.2 | 31.7 | | | |
| Comparative | 0 | 308.2 | 2822 | 27.8 | 350 | 514 |
| Example 1 | | 33.9 | 321 | | | |

As shown in Table 1, the fluorine ion concentrations for the fluororesin molded articles that had been treated with urea (30 to 120 ppm), ammonium hydrogen carbonate (200 to 500 ppm), or sodium hydroxide (100 ppm) were 1/37 to 1/92 the fluorine ion concentrations of the fluororesin molded articles that had not been treated with fluorine ion lowering compound.

In addition, as shown in Table 2, there was no significant difference in terms of DSC results and tensile properties between fluororesin molded articles that had been treated with 120 ppm of urea and fluororesin molded articles formed from fluororesin that had not been treated with urea.

### [Field of Industrial Utilization]

In accordance with the present invention, a fluororesin molded article is offered in which the eluted fluorine ion concentration has been decreased while maintaining the superior heat resistance, chemical resistance and mechanical characteristics of fluororesins.

The present invention involves providing a trace amount of fluorine ion lowering compound along with the fluororesin. Although the mechanism of this fluorine ion lowering compound is unclear, it allows a fluororesin molded article to be offered that has a greatly decreased eluted fluorine ion concentration while maintaining the superior heat resistance, chemical resistance and mechanical characteristics of the fluororesin.

In accordance with the present invention, a molded article can be offered that has only 1 ppm or less, by weight, of elutable fluoride ions.

The fluororesin molded article having fewer elutable fluoride ions that is offered by the present invention is suitable for use in the fields of semiconductors and semiconductor liquid chemicals.

## Claims

1. A method for producing a fluororesin molded article, **characterized in that** a fluororesin is fluorinated and then melt-molded in the presence of a fluorine ion lowering compound selected from ammonia, urea, nitrogen compounds that can generate ammonia, and alkalis, to form said article.

2. The method for producing a fluororesin molded article according to claim 1, **characterized in that** the compound that can generate ammonia is at least one type of compound selected from ammonium salts and organic amine compounds.

3. The method for producing a fluororesin molded article according to claim 1, **characterized in that** the alkali is at least one type of compound selected from alkali metal hydroxides and alkali metal carbonates.

4. The method for producing a fluororesin molded article according to any of claims 1 to 3, **characterized in that** the fluorine ion lowering compound is mixed with the fluororesin after fluorination but prior to melt-molding.

5. The method for producing a fluororesin molded article according to claim 4, **characterized in that** a solution of the fluorine ion lowering compound is brought into contact with the fluororesin, followed by drying to mix it in the fluororesin after fluorination of the fluororesin but prior to melt-molding.

6. The method for producing a fluororesin molded article according to any of claims 1 to 5, wherein the fluorine ion lowering compound is added to the fluororesin at the time of melt-molding.

7. The method for producing a fluororesin molded article according to any of claims 1 to 6, **characterized in that** the fluororesin is melt-molded in the presence of 0.1 to 1000 ppm of fluorine ion lowering compound with respect to the fluororesin.

8. The method for producing a fluororesin molded article according to any of claims 1 to 7, wherein the fluororesin is a copolymer of tetrafluoroethylene with at least one type of fluorinated monomer that can be copolymerized with tetrafluoroethylene.

9. The method for producing a fluororesin molded article according to claim 8, wherein the fluororesin is a copolymer of tetrafluoroethylene with perfluoro(alkylvinyl ether).

10. The method for producing a fluororesin molded article according to any of claims 1 to 9, wherein melt-molding of the fluororesin is carried out by any of the following melt-molding methods: melt extrusion molding, injection molding, transfer molding, rotary molding, compression molding, and blow molding.

11. A method for producing a fluororesin molded article, **characterized in that** tetrafluoroethylene and at least one type of copolymerizable fluorinated monomer are polymerized to prepare fluororesin particles, and the resulting fluororesin particles are fluorinated and then brought into contact with inert gas, whereupon the resulting fluorinated fluororesin particles are melt-molded in the presence of a fluorine ion lowering compound selected from ammonia, urea, nitrogen compounds that can generate ammonia, and alkalis to form said article.

12. The method according to claim 11, wherein the fluororesin molded article is a valve, wafer carrier, bottle, pipe, film, tube, sheet, or electrical wire.

13. A fluororesin molded article which is a melt-molded article of a tetrafluoroethylene/perfluoro(alkylvinyl ether) copolymer, where the fluorine ion concentration is 1 ppm or less when 36 g of the molded article is introduced into 40 g of ultrapure water, and elution is carried out under elution conditions of 24 h in air at 25°C, whereupon the eluted fluorine ions are measured in accordance with JIS K0127 (ion chromatography).

14. A fluororesin composition in the form of particles selected from powder, flake, pellet, cube and bead that contains
(i.) a melt-moldable tetrafluoroethylene and perfluoro(alkylvinyl ether) copolymer, said copolymer having less than six-CF₂CH₂OH, -CONH₂, and -COF terminal groups per 10⁶ carbon atoms and having 3 ppm or less, by weight, of elutable fluorine atoms, elution is carried out under elution conditions of 24 h in air at 25°C, wherein the eluted fluorine ions are measured in accordance with JIS K0127 (ion chromatography) and
(ii.) a fluorine ion lowering compound.

15. The fluororesin composition according to claim 14, wherein the fluorine ion lowering compound is made present by applying it to the particles.

## Patentansprüche

1. Verfahren für die Herstellung eines geformten Fluorharzartikels, **dadurch gekennzeichnet, dass** ein Fluorharz fluoriert und dann in Gegenwart einer Fluorionen reduzierenden Verbindung ausgewählt unter Ammoniak-, Harnstoff-, Stickstoffverbindungen, die Ammoniak erzeugen können, und Alkalien schmelzgeformt wird, um den Artikel zu bilden.

2. Verfahren für die Herstellung eines geformten Fluorharzartikels nach Anspruch 1, **dadurch gekennzeichnet, dass** die Verbindung, die Ammoniak erzeugen kann, mindestens ein Typ Verbindung ist ausgewählt unter Ammoniumsalzen und organischen Aminverbindungen.

3. Verfahren für die Herstellung eines geformten Fluorharzartikels nach Anspruch 1, **dadurch gekennzeichnet, dass** das Alkali mindestens ein Typ Verbindung ist ausgewählt unter Alkalimetallhydroxiden und Alkalimetallcarbonaten.

4. Verfahren für die Herstellung eines geformten Fluorharzartikels nach einem der Ansprüche 1 bis 3, **dadurch gekennzeichnet, dass** die Fluorionen reduzierende Verbindung mit dem Fluorharz nach der Fluorierung aber vor dem Schmelzformen gemischt wird.

5. Verfahren für die Herstellung eines geformten Fluorharzartikels nach Anspruch 4, **dadurch gekennzeichnet, dass** eine Lösung der Fluorionen reduzierenden Verbindung mit dem Fluorharz in Kontakt gebracht wird, gefolgt von Trockenen, um es in das Fluorharz nach der Fluorierung des Fluorharzes aber vor dem Schmelzformen einzumischen.

6. Verfahren für die Herstellung eines geformten Fluorharzartikels nach einem der Ansprüche 1 bis 5, wobei die Fluorionen reduzierende Verbindung dem Fluorharz zum Zeitpunkt des Schmelzformens zugegeben wird.

7. Verfahren für die Herstellung eines geformten Fluorharzartikels nach einem der Ansprüche 1 bis 6, **dadurch gekennzeichnet, dass** das Fluorharz in Gegenwart von 0,1 bis 1000 ppm Fluorionen reduzierender Verbindung mit Bezug auf das Fluorharz schmelzgeformt wird.

8. Verfahren für die Herstellung eines geformten Fluorharzartikels nach einem der Ansprüche 1 bis 7, wobei das Fluorharz ein Copolymer von Tetrafluorethylen mit mindestens einem Typ von fluoriertem Monomer ist, das mit Tetrafluorethylen copolymerisiert werden kann.

9. Verfahren für die Herstellung eines geformten Fluorharzartikels nach Anspruch 8, wobei das Fluorharz ein Copolymer von Tetrafluorethylen mit Perfluor(alkylvinylether) ist.

10. Verfahren für die Herstellung eines geformten Fluorharzartikels nach einem der Ansprüche 1 bis 9, wobei das Schmelzformen des Fluorharzes durch irgendeines der folgenden Schmelzformverfahren durchgeführt wird: Schmelzextrusionsformen, Spritzgießen, Spritzpressverfahren, Rotationsformen, Formpressen und Blasformen.

11. Verfahren für die Herstellung eines geformten Fluorharzartikels, **dadurch gekennzeichnet, dass** Tetrafluorethylen und mindestens ein Typ von copolymerisierbarem fluoriertem Monomer polymerisiert werden, um Fluorharzteilchen herzustellen, und die resultierenden Fluorharzteilchen fluoriert und dann mit inertem Gas in Kontakt gebracht werden, woraufhin die resultierenden fluorierten Fluorharzteilchen in Gegenwart einer Fluorionen reduzierenden Verbindung ausgewählt unter Ammoniak-, Harnstoff-, Stickstoffverbindungen, die Ammoniak erzeugen können, und Alkalien schmelzgeformt werden, um den Artikel zu bilden.

12. Verfahren nach Anspruch 11, wobei der geformte Fluorharzartikel ein Ventil, Waferträger, eine Flasche, eine Rohrleitung, eine Folie, ein Rohr, eine Platte oder ein elektrischer Draht ist.

13. Geformter Fluorharzartikel, der ein schmelzgeformter Artikel aus einem Tetrafluorethylen-Perfluor(alkylvinylether)-Copolymer ist, wobei die Fluorionenkonzentration 1 ppm oder weniger beträgt, wenn 36 g des geformten Artikels in 40 g ultrareines Wasser eingeführt werden und eine Elution unter Elutionsbedingungen von 24 h in Luft bei 25 °C durchgeführt wird, woraufhin die eluierten Fluorionen JIS KO127 (Ionenchromatographie) entsprechend gemessen werden.

14. Fluorharzzusammensetzung in Form von Teilchen ausgewählt unter Pulver, Flocken, Kügelchen, Würfel und Perlen, die Folgendes enthält:
(i.) ein schmelzformbares Tetrafluorethylen- und Perfluor(alkylvinylether)-Copolymer, wobei das Copolymer weniger als sechs -CF₂CH₂OH-, -CONH₂- und -COFendständige Gruppen pro 10⁶ Kohlenstoffatome und 3 ppm oder weniger, auf das Gewicht bezogen, eluierbare Fluoratome aufweist, wobei die Elution unter Elutionsbedingungen von 24 h in Luft bei 25° C durchgeführt wird, wobei die eluierten Fluorionen JIS KO127 (Ionenchromatographie) entsprechend gemessen werden und
(ii.) eine Fluorionen reduzierende Verbindung.

15. Fluorharzzusammensetzung nach Anspruch 14, wobei die Fluorionen reduzierende Verbindung durch Aufbringen derselben auf die Teilchen vergegenwärtigt wird.

## Revendications

1. Procédé de production d'un article moulé en résine fluorée, **caractérisé en ce qu'**une résine fluorée est fluorée et ensuite moulée à l'état fondu en présence d'un composé de réduction des ions fluor sélectionné parmi les composés ammoniac, urée, azote qui peuvent générer de l'ammoniac, et des substances alcalines, pour former ledit article.

2. Procédé de production d'un article moulé en résine fluorée selon la revendication 1, **caractérisé en ce que** le composé qui peut générer l'ammoniac est au moins un type de composé sélectionné parmi les sels d'ammonium et les composés d'amine organique.

3. Procédé de production d'un article moulé en résine fluorée selon la revendication 1, **caractérisé en ce que** la substance alcaline est au moins un type de composé sélectionné parmi les hydroxydes de métal alcalin et les carbonates de métal alcalin.

4. Procédé de production d'un article moulé en résine fluorée selon l'une quelconque des revendications 1 à 3, **caractérisé en ce que** le composé de réduction des ions fluor est mélangé avec la résine fluorée après la fluoration mais avant le moulage à l'état fondu.

5. Procédé de production d'un article moulé en résine fluorée selon la revendication 4, **caractérisé en ce qu'**une solution du composé de réduction des ions fluor est portée au contact de la résine fluorée, suivi du séchage pour le mélanger dans la résine fluorée après la fluoration de la résine fluorée mais avant le moulage à l'état fondu.

6. Procédé de production d'un article moulé en résine fluorée selon l'une quelconque des revendications 1 à 5, le composé de réduction des ions fluor étant ajouté à la résine fluorée au moment du moulage à l'état fondu.

7. Procédé de production d'un article moulé en résine fluorée selon l'une quelconque des revendications 1 à 6, **caractérisé en ce que** la résine fluorée est moulée à l'état fondu en présence de 0,1 à 1 000 ppm de composé de réduction des ions fluor par rapport à la résine fluorée.

8. Procédé de production d'un article moulé en résine fluorée selon l'une quelconque des revendications 1 à 7, la résine fluorée étant un copolymère de tétrafluoroéthylène avec au moins un type de monomère fluoré qui peut être copolymérisé avec du tétrafluoroéthylène.

9. Procédé de production d'un article moulé en résine fluorée selon la revendication 8, la résine fluorée étant un copolymère de tétrafluoroéthylène avec du perfluoro(éther d'alkylvinyle).

10. Procédé de production d'un article moulé en résine fluorée selon l'une quelconque des revendications 1 à 9, le moulage à l'état fondu de la résine fluorée étant conduit par n'importe lequel des procédés suivants de moulage à l'état fondu: moulage par extrusion de masse fondue, moulage par injection, moulage par transfert, moulage rotatif, moulage par compression, et moulage-soufflage.

11. Procédé de production d'un article moulé en résine fluorée, **caractérisé en ce que** le tétrafluoroéthylène et au moins un type de monomère fluoré copolymérisable sont polymérisés pour préparer des particules de résine fluorée, et les particules de résine fluorée résultantes sont fluorées et ensuite portées au contact d'un gaz inerte, à l'issue de quoi les particules de résine fluorée résultantes sont moulées à l'état fondu en présence d'un composé de réduction des ions fluor sélectionné parmi les composés ammoniac, urée, azote qui peuvent générer de l'ammoniac, et des substances alcalines pour former ledit article.

12. Procédé selon la revendication 11, l'article moulé en résine fluorée étant une valve, un support de galette, une bouteille, une conduite, un film, un tube, une feuille, ou un câble électrique.

13. Article moulé en résine fluorée qui est un article moulé à l'état fondu d'un copolymère de tétrafluoroéthylène/perfluoro(éther d'alkylvinyle), la concentration des ions fluor étant de 1 ppm ou moins lorsque 36 g de l'article moulé sont introduits dans 40 g d'eau ultra pure, et l'élution est conduite sous des conditions d'élution de 24 h à l'air à 25°C, à l'issue de quoi les ions fluor élués sont mesurés selon la norme JIS K0127 (chromatographie ionique).

14. Composition de résine fluorée sous la forme de particules sélectionnées parmi la poudre, le flocon, la pastille, le cube et la bille qui contient
(i.) un copolymère de tétrafluoroéthylène et perfluoro(éther d'alkylvinyle) pouvant être moulé à l'état fondu, ledit copolymère ayant moins de six groupes terminaux -CF₂CH₂OH, -CONH₂, et -COF pour 10⁶ atomes de carbone et ayant 3 ppm ou moins, en poids, d'atomes de fluor pouvant être élués, l'élution étant conduite sous des conditions d'élution de 24 h à l'air à 25°C, les ions fluor élués étant mesurés selon la norme JIS K0127 (chromatographie ionique) et
(ii.) un composé de réduction des ions fluor.

15. Composition de résine fluorée selon la revendication 14, le composé de réduction des ions fluor étant rendu présent en l'appliquant aux particules.
